# EUROPÄISCHE PATENTSCHRIFT

(11) **EP 1 940 604 B1**
(45) Veröffentlichungstag und Bekanntmachung des Hinweises auf die Patenterteilung: **27.10.2010**
(21) Anmeldenummer: 06754452.8
(22) Anmeldetag: 20.06.2006
(51) Int. Cl.: B29C 73/16

(54) **EINFÜLLSYSTEM ZUM ABDICHTEN UND AUFPUMPEN VON REIFEN**
FILLING SYSTEM FOR SEALING AND INFLATING TYRES
SYSTEME DE REMPLISSAGE POUR REPARER LES FUITES ET GONFLER DES PNEUS

(30) Priorität: 28.10.2005 DE 202005017071 U
(43) Veröffentlichungstag der Anmeldung: 09.07.2008
(73) Patentinhaber: Doukas AG, 8280 Kreuzlingen (CH)
(72) Erfinder: Stehle, Michael, 88662 Überlingen (DE)
(74) Vertreter: Weiss, Peter
(86) Internationale Anmeldenummer: PCT/EP2006/005898
(87) Internationale Veröffentlichungsnummer: WO 2007/048453

(56) Entgegenhaltungen:
- WO-A-2005/084968
- DE-A1- 19 948 706
- DE-A1-102004 042 911
- DE-B3-102004 048 002
- FR-A- 2 753 653
- US-A1- 2002 121 331
- US-A1- 2003 056 851
- US-A1- 2005 056 358
- US-B1- 6 283 172
- US-B1- 6 293 762

## Beschreibung

Die vorliegende Erfindung betrifft ein Einfüllsystem zum Abdichten und Aufpumpen von Reifen mit zumindest einer Druckquelle, insbesondere Kompressor und zumindest einem Behälter zur Aufnahme von Reifendichtmittel.

Derartige Einfüllsysteme sind in vielfältiger Form und Ausführung auf dem Markt bekannt und erhältlich. Sie dienen zum Einbringen von Reifendichtmittel in defekte Reifen bei Reifenpannen und zum Abdichten eins defekten Reifens. Dabei wird Druckluft mittels eines Kompressors in eine Flasche mit Reifendichtmittel eingepresst und über entsprechende Steigrohre wird dann das Reifendichtmittel in den defekten Reifen über das Ventil eingepumpt.

Nachteilig bei herkömmlichen Reifensystemen ist, dass diese für jeden Fahrzeugtyp separat ausgelegt und ausgerichtet werden müssen, schwer zu bedienen sind, im Pannenfall nicht einfach zu handeln sind, wobei Reifendichtmittel häufig austritt und den Benutzer verschmutzt. Herkömmliche Systeme sind nicht auf schräg geneigten Untergründen anzuwenden und müssen nach Gebrauch durch die Werkstatt oder den Fachbetrieb kostenintensiv erneuert bzw. ausgetauscht werden.

Die DE 199 48 706 A1 offenbart eine Vorrichtung zum Abdichten und Aufpumpen von Reifen, bestehend aus einem Behälter, der innerhalb eine separate Ausnehmung als Vertiefung im Bereich des Behälterbodens aufweist und ein zusätzliches Sockelelement benötigt, um dem Behälter gegenüber einen Untergrund aufzustellen.

Die nachveröffentlichte DE 10 2004 042 911 offenbart einen kolbenartigen Behälter zum Ausbringen von Reifendichtmittel, der tubenartig Reifendichtmittel aus einem Behälter auspresst.

Aus der US 6,293,762 B1 ist ein Fahrzeug zum Ausbringen von Reifendichtmittel beschrieben, welches einen sehr gross ausgebildeten Behälter zur Aufnahme von Reifendichtmittel aufweist. Dieser Behälter ist mittels eines Kompressors unter Druck setzbar. Zum Betreiben des Kompressors weist das rollbare Fahrzeug eine eigene Energiequelle auf.

In der DE 10 2004 048 002 B3 ist eine Abdichtvorrichtung beschrieben, bei welcher Reifendichtmittel in einem Druckschlauch bevorratet ist. Der Druckschlauch ist auf eine eigens dafür vorgesehene Trommel aufwickelbar.

In der FR-A-2 753 653 sind zwei Behälter zur Aufnahme vom Druckluft und Reifendichtmittel in einer Box eingesetzt, die dann beide separat an einen Fahrzeugreifen zur Reifenreparatur angeschlossen werden können.

Die US 2002/0121331 A1 offenbart ein Reifenreparatursystem, bei welchem an ein zylindrisch ausgebildeten Behälter zur Aufnahme von Reifendichtmittel eine Pressluftflasche anschliessbar ist. Der Behälter zur Aufnahme von Reifendichtmittel wird dann an ein Fahrzeugreifen angeschlossen.

Der vorliegenden Erfindung liegt daher die Aufgabe zugrunde ein Einfüllsystem der eingangs genannten Art zu schaffen, welches die genannten Nachteile beseitigt und mit welchem auf einfache und kostengünstige Weise ein leicht handzuhabendes Einfüllsystem geschaffen wird, welches universell für unterschiedlichste Fahrzeugtypen einsetzbar bwz. verwendbar ist und zudem die Handhabbarkeit des Benutzers wesentlich erleichtert, sowie nach erfolgter Benutzung ein Austausch erleichtert.

Zur Lösung dieser Aufgabe führen die Merkmale des Anspruches 1 sowie die des nebengeordneten Anspruchs.

Bei der vorliegenden Erfindung hat sich als besonders vorteilhaft erwiesen, zylindrisch und scheibenartig ein Gehäuse auszubilden, in welchem die wesentlichen Bauteile, wie Druckquelle, insbesondere Druckluftquelle, Kompressor untergebracht sind, welcher von einer externe Energiequelle oder akkubetrieben mit Energie versorgt werden kann. Im Gehäuse selbst sind entsprechende Schalter, Ventilumschalter, Manometer od. dgl. vorgesehen, sowie entsprechende Aufnahmeräume, Ringräume zur Aufnahme der elektrischen Anschlussleitungen bzw. der Druckluftzuleitung geschaffen. Dabei kann eine Druckluftleitung im mantelseitigen Bereich vorzugsweise zwischen dem daran anschliessenden Behälter zur Aufnahme von Reifendichtmittel in einem Absatz eingelassen bzw. gehaltert sein.

Im Anschluss an das querschnittlich rund und zylindrisch ausgebildete Gehäuse zur Aufnahme des Kompressors schliesst entsprechend ebenfalls zylindrisch querschnittlich vorzugsweise rund ein Behälter zur Aufnahme von Reifendichtmittel an. Bevorzugt ist dieser in Form eines Reifens ausgebildet. Dieser Behälter zur Aufnahme von Reifendichtmittel ist mit einer Stirnseite des Gehäuses zur Aufnahme des Kompressors verbindbar, rastbar, schraubbar od. dgl.. Dabei können entsprechend sockelartig ausgebildete Vorsprünge oder Vertiefungen zwischen Behälter und Stirnseite des Gehäuses vorgesehen sein, um den Behälter wiederlösbar mit dem Gehäuse des Kompressors zu verschrauben bzw. zu verbinden.

Wichtig ist bei der vorliegenden Erfindung, dass das Gehäuse und der Behälter zur Aufnahme von Reifendichtmittel querschnittlich gleich, bevorzugt rund ausgebildet sind und in etwa die gleichen Abmasse bzw. Durchmesser besitzen. Auf diese Weise ist eine kompakte flache Einheit gebildet, die leicht in Kofferräumen, Reserveradmulden, Innenräumen von Ersatzradfelgen etc. zu verstauen bzw. aufzubewahren ist.

Dabei kann ein und dasselbe Gehäuse mit eingesetztem Kompressor etc. für unterschiedlich hoch bzw. dick ausgebildete Behälter zur Aufnahme von Reifendichtmittel verwendet werden. Für die Anwendung für Motorräder oder Fahrräder genügt ein geringes zu bevorratendes Volumen an Reifendichtmittel, so dass dieser zwar in etwa den gleichen Durchmesser aufweist, wie das Gehäuses des Kompressors, jedoch eine geringe Höhe bzw. von geringerer Dicke ist. Sollen entsprechend grössere Mengen an Reifendichtmitteln bevorratet werden für beispielsweise PKW-Reifen, so kann entsprechend bei gleichbleibendem Durchmesser eine grössere Höhe des Behälters zur Aufnahme von Reifendichtmittel gewählt werden.

Für noch grössere Reifen, die noch grössere Mengen an Reifendichtmittel im Pannenfall erfordern, wie beispielsweise LKW-Reifen öder Traktor-Reifen kann entsprechend bei gleichbleibendem Durchmesser eine noch grössere Höhe bzw. Dicke des Behälters zur Aufnahme von Reifendichtmittel gewählt werden, um grössere Mengen an Reifendichtmittel dort zu bevorraten. Dabei kann unabhängig von der unterschiedlichen Höhe des Reifendichtmittels immer der Behälter mit dem Gehäuse des Kompressors wiederlösbar verbunden werden, wobei sich die Bauweise des Kompressor nicht ändert.

Dem Behälter zur Aufnahme von Reifendichtmittel ist ebenfalls stirnseitig eine Entnahmeeinrichtung zugeordnet, an welche eine Druckluftzuleitung anschliesst, um Druckluft in den Behälter einzubringen, wobei über die Entnahmeleitung, die in den Behälter mittels Steigleitungen od. dgl. einmündet, dann das Reifendichtmittel in den Reifen ausgebracht werden kann.

Nach einem Benutzen des Einfüllsystems wird lediglich der Behälter mit Entnahmeeinrichtung ausgetauscht. Dies kann der Benutzer selbst vornehmen, ohne dass entsprechendes Werkstatt- oder Fachpersonal hierzu erforderlich ist. Dieser kann aus dem Zubehörhandel lediglich den Behälter mit Entnahmeeinrichtung wieder mit gewünschter Menge an Reifendichtmittel nacherwerben und auf das bestehende Gehäuse des Kompressors aufschrauben.

Dabei soll auch im Rahmen der vorliegenden Erfindung liegen, dass das Gehäuse und/oder der Behälter zur Aufnahme von Reifendichtmittel jeweils reifenartig ausgebildet sein kann können, wobei entweder das Gehäuses des Kompressors oder der Behälter von Reifendichtmittel zum Aufstellen auf einen Untergrund geeignet sein kann. Hierauf sie die Erfindung nicht beschränkt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte perspektivische Ansicht auf ein Einfüllsystem zum Abdichten und Aufpumpen von Reifen;
Figur 2 eine schematisch dargestellte perspektivische Ansicht auf das Einfüllsystem gemäss Figur 1 in einer Gebrauchslage;
Figur 3 einen schematisch dargestellten Längsschnitt durch das Einfüllsystem gemäss Figur 1;
Figur 4a eine schematisch dargestellte Draufsicht auf ein weiteres Einfüllsystem gemäss Figur 1;
Figur 4b eine schematisch dargestellte Draufsicht auf ein weiteres Einfüllsystem gemäss Figur 1 mit schmal ausgebildeten Behälter zur Aufnahme von Reifendichtmittel;
Figur 4C eine Draufsicht auf ein weiteres Ausführungsbeispiel des Einfüllsystems gemäss Figur 1;
Figur 4d eine schematisch dargestellte Draufsicht auf das zylindrisch ausgebildete Gehäuse des Kompressors mit Deckelelement;
Figuren 5a und 5b schematisch dargestellte Draufsichten auf zwei unterschiedliche Aufstellmöglichkeiten des Einfüllsystems auf einen Untergrund.

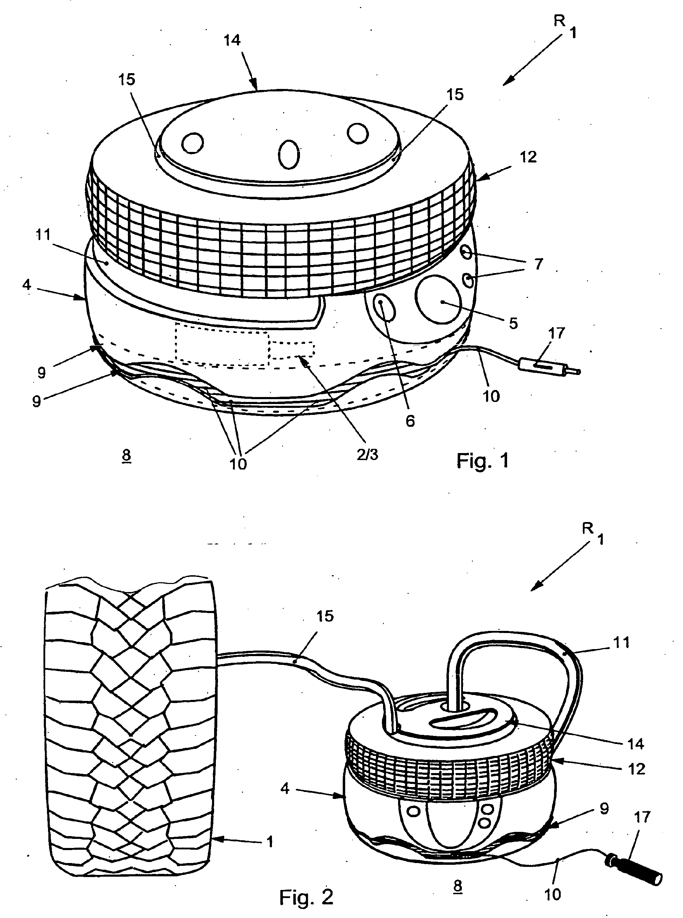

Gemäss Figur 1 weist ein erfindungsgemässes Einfüllsystem R₁ zum Abdichten und Aufpumpen von Reifen 1, siehe Figur 2, eine Druckquelle 2, insbesondre Kompressor 3 auf, der Druckluft produziert. Auch an andere Druckquellen 2, wie komprimierte Gas- oder Luftbehälter können hier gemeint sein.

Dabei ist die Druckquelle 2, insbesondere der Kompressor 3 in einem Gehäuse 4 angeordnet, in welchem auch ein Manometer 5 mantelseitig und Schalter 6 sowie Umschalter 7 vorgesehen sind.

Bevorzugt ist das Gehäuse 4 zur Aufnahme der Druckquelle 2, insbesondere des Kompressors 3 zylindrisch ausgebildet und steht auf einem Untergrund 8 auf.

Neben seiner äusseren Mantelfläche ist ein Ringraum 9 eingelassen, welcher der Aufnahme der elektrischen Anschlussleitung 10 dient.

Der Kompressor steht direkt oder indirekt mit dem Manometer 5 bzw. einer Druckluftzuleitung 11 in Verbindung.

Als besonders vorteilhaft hat sich bei der vorliegenden Erfindung erwiesen, einen Behälter 12 zum Aufnehmen von Reifendichtmittel 13, siehe Figur 2, dem Gehäuse 4 mit integriertem Kompressors 3 stirnseitig aufzusetzen.

Dabei ist der Behälter 12 zur Aufnahme von Reifendichtmittel 13 querschnittlich rund und zylindrisch, vorzugsweise reifenartig ausgebildet.

Bevorzugt sind in etwa die Durchmesser des Gehäuses 4 und des Behälters 12 zur Aufnahme von Reifendichtmittel 13 gleich gross.

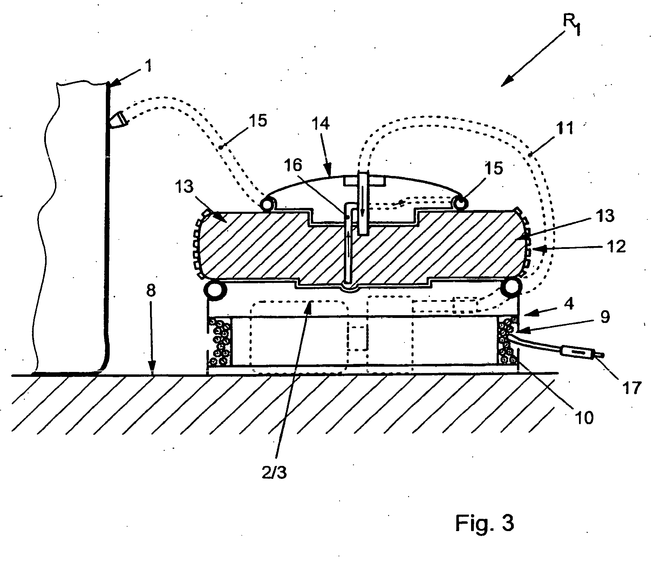

Dabei kann der Behälter 12, wie es in der querschnittlichen Darstellung gemäss Figur 3 angedeutet ist, fest und wiederlösbar mit dem Gehäuse 4 verbunden, insbesondere verschraubt werden.

Zusätzlich ist vorzugsweise mittig dem Behälter 12 eine Entnahmeeinrichtung 14 zugeordnet, die über eine Entnahmeleitung 15 an den Reifen 1 einends anschliessbar ist und andernends über eine feste oder flexible Steigleitung 16 in den Behälter 12 eingreift, um dort Reifendichtmittel 13 zu entnehmen.

Nicht näher dargestellte Ventile etc. regeln ein sauberes Verschliessen im Ruhezustand bzw. ein Öffnen in Gebrauchslage. Hierauf soll nicht näher eingegangen werden.

Wichtig bei der vorliegenden Erfindung ist, dass der Behälter 12 von seiner äusseren Form in etwa reifenartig ausgebildet ist und in etwa einen gleichen Durchmesser aufweist, wie das Gehäuse 4 zur Aufnahme von Kompressor 3 mit integriertem bzw. eingesetztem Manometer 5 ggf. Schalter 6 und Umschalter 7, sowie elektrischen Anschlussleitungen 12 mit Steckerelement 17 zum Anschliessen an eine beliebige Energiequelle. Durch die scheibenartige und zylindrische Bauweise des Gehäuses 4 mit eingesetztem Kompressor und durch die entsprechend reifenartig ausgebildete Form des Behälters 12 zur Aufnahme von Reifendichtmittel, ist eine kompakte Einheit als Einfüllsystem R₁ geschaffen, welches einen festen Stand zum Untergrund 8 besitzt, und auch bei geneigten Untergründen 8 nicht umfällt, sowie sehr platzsparend, beispielsweise in entsprechenden rund ausgebildeten Mulden im Kofferraum des Fahrzeuges oder sogar innerhalb der Felge eines Ersatzrades untergebracht werden kann.

Zudem ist ein Handling dieser als Einheit ausgebildeten Einfüllsystems wesentlich erleichtert, da nicht nur die Standfestigkeit sondern auch der Austausch des Behälters 12 vom Gehäuse 4 des Kompressors 3 sehr leicht durch beispielsweise Verdrehen über entsprechende ineinandergreifende Gewinde entfernt und nach Gebrauch ausgetauscht werden kann.

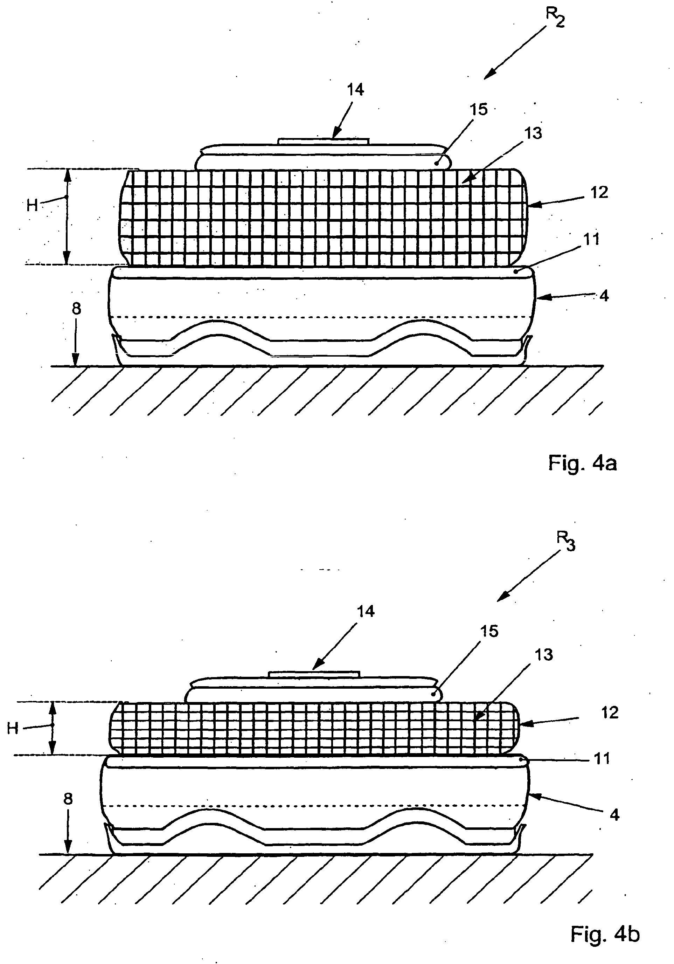

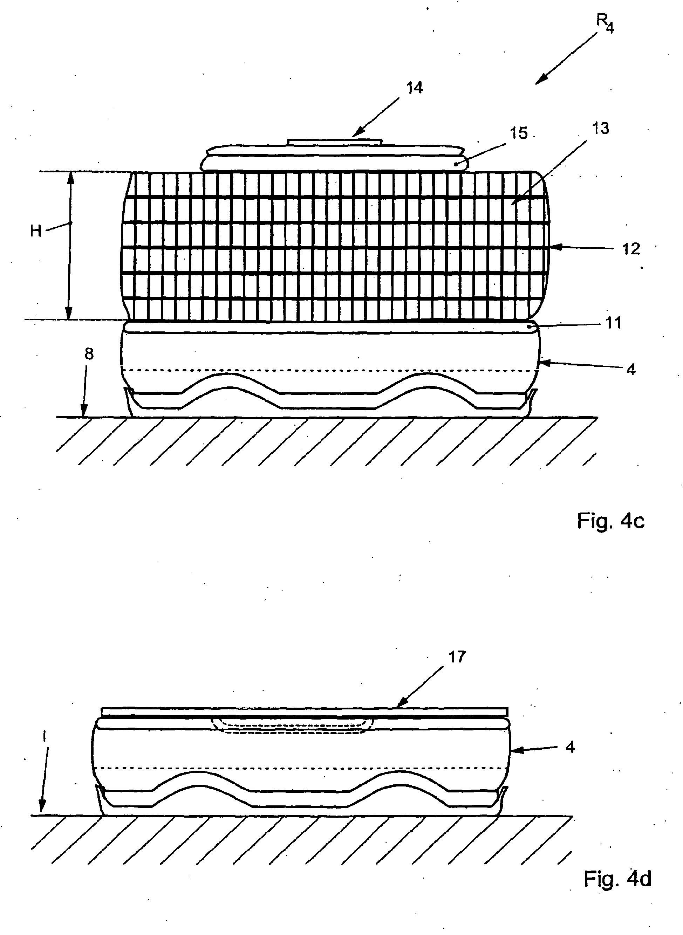

Zudem hat sich bei der vorliegenden Erfindung als vorteilhaft erwiesen, dass lediglich ein und dasselbe Gehäuse 4 mit eingesetztem Kompressor 3 verwendet werden kann, um beispielweise unterschiedlich gross ausgebildete Behälter 12 zur Aufnahme von unterschiedlichen Mengen an Reifendichtmittel zu schaffen, wie es beispielsweise in den Figuren 4a, 4b und 4c dargestellt ist.

Bevorzugt weist das Gehäuse 4 eine einheitliche Höhe und einen einheitlichen Durchmesser auf.

Um unterschiedliche Volumina für unterschiedliche Anwendungszwecke an Reifendichtmittel 13 zu bevorraten, hat sich als vorteilhaft bei der vorliegenden Erfindung erwiesen, unterschiedliche Behälter 12 mit unterschiedlicher Höhe H zu wählen, um unterschiedliche Volumina an Reifendichtmittel 13 zu bevorraten.

Der Behälter 12 zur Aufnahme von Reifendichtmittel 13 gemäss Figur 4a ist bei einem gleichbleibenden Durchmesser zum Gehäuse 4 von einer definierten Höhe H, um eine definierte Menge an Reifendichtmittel unterzubringen.

Dieses Einfüllsystem R₂ dient beispielsweise der Aufnahme von Reifendichtmittel 13 für PKWs.

In dem Ausführungsbeispiel gemäss Figur 4b ist ein Einfüllsystem R₃ der o.g. Art beschrieben, welches einen schmaleren Behälter 12 aufweist, welcher ebenfalls in etwa den gleichen Durchmesser besitzt, wie das Gehäuse 4 zur Aufnahme des Kompressors 3. Entsprechend weniger Reifendichtmittel 13 ist im vorliegenden Behälter 12, der ebenfalls reifenartig ausgebildet ist, bevorratet und kann beispielsweise für Fahrräder oder Motorräder Anwendung finden.

Für Traktoren und Lastkraftwagen ist ein Behälter 12 von einer grossen Höhe H gemäss Figur 4c eines Einfüllsystems R₄ aufgezeigt, der eine wesentlich grössere Menge an Reifendichtmittel 13 bevorratet.

Auf diese Weise wird der gesamte Durchmesser des Einfüllsystems R₁ bis R₄ nicht verändert bzw. konstant gehalten und lediglich über unterschiedliche Höhen H des Behälters 12 Einfluss genommen auf die zu bevorratende Menge an Reifendichtmittel 13.

Im Ausführungsbeispiel der Erfindung gemäss Figur 4d kann das Gehäuse 4 mit integriertem Kompressor 3 auch als "Stand-Alone" Ausführungsform verwendet werden, um beispielsweise Reifen, Luftmatratzen, Schlauchboote od. dgl. aufzupumpen. Dabei kann ein Deckelement 17 vorgesehen sein, um eine saubere Standfläche oder Abdeckung des Gehäuses 4 des Kompressors 3 zu gewährleisten.

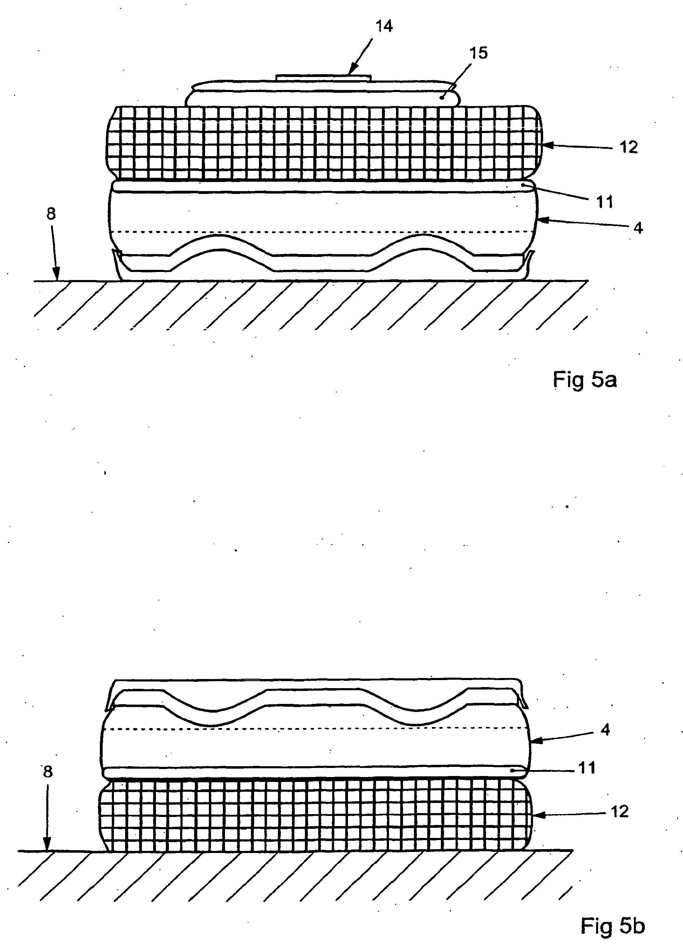

In dem Ausführungsbeispiel gemäss den Figuren 5a und 5b soll lediglich angedeutet werden, dass nicht nur das Gehäuse 4 auf einem Untergrund 8 aufgestellt werden kann, sondern auch, wie es in Figur 5b angedeutet ist, der Behälter 12 direkt auf dem Untergrund 8 aufliegt und darüber, in entsprechend oben beschriebener Weise, das Gehäuse 4 zur Aufnahme von Kompressor 3 etc. anschliesst. Auch dies soll im Rahmen der vorliegenden Erfindung liegen.

### Bezugszeichenliste

| | | | | | |
|---|---|---|---|---|---|
| 1 | Reifen | 34 | | 67 | |
| 2 | Druckquelle | 35 | | 68 | |
| 3 | Kompressor | 36 | | 69 | |
| 4 | Gehäuse | 37 | | 70 | |
| 5 | Manometer | 38 | | 71 | |
| 6 | Schalter | 39 | | 72 | |
| 7 | Umschalter | 40 | | 73 | |
| 8 . | Untergrund | 41 | | 74 | |
| 9 | Ringraum | 42 | | 75 | |
| 10 | elktr.Anschlussleitung | 43 | | 76 | |
| 11 | Druckluftzuleitung | 44 | | 77 | |
| 12 | Behälter | 45 | | 78 | |
| 13 | Reifendichtmittel | 46 | | 79 | |
| 14 | Entnahmeinrichtung | 47 | | | |
| 15 | Entnahmeleitung | 48 | | | |
| 16 | Steigleitung | 49 | | | |
| 17 | Deckel | 50 | | R₁ | Einfüllsystem |
| 18 | | 51 | | R₂ | Einfüllsystem |
| 19 | | 52 | | R₃ | Einfüllsystem |
| 20 | | 53 | | R₄ | Einfüllsystem |
| 21 | | 54 | | | |
| 22 | | 55 | | H | Höhe |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Einfüllsystem zum Abdichten und Aufpumpen von Reifen (1) mit zumindest einer Druckquelle (2), insbesondere Kompressor (3) und zumindest einem Behälter (12) zur Aufnahme von Reifendichtmittel (13),
**dadurch gekennzeichnet,**
**dass** der zumindest eine Behälter (12) zur Aufnahme von Reifendichtmittel (13) sowie das zumindest eine Gehäuse (4) zur Aufnahme der zumindest einen Druckquelle (2) querschnittlich rund ausgebildet sind, wobei das Gehäuse (4) der Druckquelle (2) sowie der Behälter (12) zur Aufnahme von Reifendichtmittel (13) in etwa gleiche Durchmesser aufweisen, und diese stirnseitig aufeinander angeordnet sind.

2. Einfüllsystem zum Abdichten und Aufpumpen von Reifen (1) mit zumindest einer Druckquelle (2), insbesondere Kompressor (3) und zumindest einem Behälter (12) zur Aufnahme von Reifendichtmittel (13), **dadurch gekennzeichnet, dass** ein Gehäuse (4) der Druckquelle (2), insbesondere des Kompressors (3) reifenartig oder zylindrisch ausgebildet ist, wobei in einer äusseren Mantelfläche des Gehäuses (4) der Druckquelle (2) ein Ringraum (9) gebildet ist, welcher der Aufnahme von elektrischen Anschlussleitungen (10) und/oder Luftzuleitungen dient, und der Ringraum (9) mantelseitig mit unterschiedliche lang ausgebildeten, von oben nach unten und/oder unten nach oben ragenden Stegelementen versehen ist, welche die im Ringraum (9) aufgewickelte elektrische Anschlussleitung (10) halten.

3. Einfüllsystem nach Anspruch 1 oder 2, **dadurch gekennzeichnet, dass** der Behälter (12) zur Aufnahme von Reifendichtmittel (13) reifenartig querschnittlich rund und scheibenartig ausgebildet ist.

4. Einfüllsystem nach wenigstens einem der Ansprüche 1 bis 3, **dadurch gekennzeichnet, dass** der Behälter (12) zur Aufnahme von Reifendichtmittel (13) stirnseitig wiederlösbar mit dem Gehäuse (4) des Kompressors (3) verbindbar oder austauschbar ist.

5. Einfüllsystem nach wenigstens einem der Ansprüche 1 bis 4, **dadurch gekennzeichnet, dass** für unterschiedliche Anwendungsbereiche und insbesondere für unterschiedliche Fahrzeuge, wie Fahrräder, Zweiräder, PKWs, LKWs, bei gleichbleibendem Durchmesser eine Höhe (H) des Behälters (12) variabel ist, um für unterschiedliche Fahrzeuge unterschiedliche Mengen an Reifendichtmittel (13) aufzunehmen.

6. Einfüllsystem nach wenigstens einem der Ansprüche 1 bis 5, **dadurch gekennzeichnet, dass** Behälter (12) mit Reifendichtmittel (13), die in etwa den gleichen Durchmesser aufweisen, wie ein Gehäuse (4) des Kompressors (3) und unterschiedliche Behälter (12) mit wählbarem Volumen in ein und demselben Gehäuse (4) mit eingesetztem Kompressor (3) stirnseitig aufsetzbar sind.

7. Einfüllsystem nach wenigstens einem der Ansprüche 1 bis 6, **dadurch gekennzeichnet, dass** das Gehäuse (4) ggf. mit einem Deckel (17) verbindbar ist und als Stand-alone Komponente als Druckluftquelle, insbesondere als separat betreibbarer Kompressor (3) ausgebildet ist.

8. Einfüllsystem nach wenigstens einem der Ansprüche 1 bis 7, **dadurch gekennzeichnet, dass** zwischen Behälter (12) zur Aufnahme von Reifendichtmittel (13) und Gehäuse (4) die Druckluftzuleitung zu gelagert ist.

9. Einfüllsystem nach Anspruch 8, **dadurch gekennzeichnet, dass** über einen radial ausgebildeten Absatz im Gehäuse (4) des Kompressors (3) und/oder im Behälter (12) zur Aufnahme von Reifendichtmittel (13) bevorzugt nahe einer äusseren Mantelfläche die Druckluftzuleitung (11) gelagert ist, welche einends direkt oder indirekt mit dem Kompressor (3) verbunden ist und andernends mit einer Entnahmeeinrichtung (14) oder einen beliebigen Benutzer zur Bereitstellung von Druckluft verbindbar oder anschliessbar ist.

10. Einfüllsystem nach wenigstens einem der Ansprüche 1 bis 6, **dadurch gekennzeichnet, dass** eine Entnahmeeinrichtung(14) in etwa mittig im Behälter (12) zur Aufnahme von Reifendichtmittel (13) angeordnet ist und mit dem Behälter (12) zur Aufnahme von Reifendichtmittel (13) verbindbar ist, wobei über die Entnahmeeinrichtung (14) Druckmittel, insbesondere Druckluft in den Behälter (12) einbringbar ist und über eine Entnahmeleitung (15) Reifendichtmittel (13) aus dem Behälter (12) in einen Reifen (1) einpumpbar ist.

11. Einfüllsystem nach Anspruch 9 oder 10, **dadurch gekennzeichnet, dass** zwischen der Entnahmeeinrichtung (14) und dem Behälter (12) zur Aufnahme von Reifendichtmittel (13) radial eine Ausnehmung gebildet ist, die der Aufnahme und Lagerung der Entnahmeleitung (15) dient.

12. Einfüllsystem nach wenigstens einem der Ansprüche 1 bis 11, **dadurch gekennzeichnet, dass** die Entnahmeeinrichtung (14) durch Eindrehen bzw. Einschrauben in den Behälter (12) zur Aufnahme von Reifendichtmittel (13) diesen öffnet und ein Entnehmen von Reifendichtmittel (13) gewährleistet.

13. Einfüllsystem nach wenigstens einem der Ansprüche 1 bis 12, **dadurch gekennzeichnet, dass** das Gehäuse (4) zur Aufnahme der Kompressors (3) entsprechende Schalter (6), Drucküberwachungssysteme, vorzugsweise im Bereich der Mantelfläche oder einer hierzu vorgesehenen Fläche aufweist.

14. Einfüllsystem nach wenigstens einem der Ansprüche 1 bis 13, **dadurch gekennzeichnet, dass** das Gehäuse (4) zur Aufnahme des Kompressors (3) oder der Behälter (12) zur Aufnahme von Reifendichtmittel (13) auf einem beliebigen Untergrund (8) aufstellbar ist/sind.

15. Einfüllsystem nach wenigstens einem der Ansprüche 1 bis 14, **dadurch gekennzeichnet, dass** die Einheit, bestehend aus Behälter (12) zur Aufnahme von Reifendichtmittel (13) und Gehäuse (4) mit integriertem Kompressor (3) in etwa gleiche, querschnittliche Durchmesser aufweisen und diese stirnseitig aufeinander angeordnet bzw. verbindbar sind, wobei diese Einheit in entsprechende Mulden, Felgen von Reifen, Ersatzrädern od. dgl. Einbauräume eines Fahrzeuges platzsparend einsetzbar ist.

## Claims

1. A filling system for sealing and pumping up tyres (1), with at least one pressure source (2), in particular compressor (3), and at least one container (12) for receiving tyre sealing compound (13),
**characterised in that**
the at least one container (12) for receiving tyre sealing compound (13) and the at least one housing (4) for receiving the at least one pressure source (2) are designed to be round in cross-section, the housing (4) of the pressure source (2) and the container (12) for receiving tyre sealing compound (13) having approximately the same diameter, and these being arranged on each other on the end face.

2. A filling system for sealing and pumping up tyres (1), with at least one pressure source (2), in particular compressor (3), and at least one container (12) for receiving tyre sealing compound (13), **characterised in that** a housing (4) of the pressure source (2), in particular of the compressor (3), is in tyre-like or cylindrical form, with an annular space (9) being formed in an outer casing surface of the housing (4) of the pressure source (2), which space serves to receive electrical connecting lines (10) and/or air feed lines, and the annular space (9) being provided on the casing side with bar elements of different lengths which protrude from above downwards and/or below upwards, which elements hold the electrical connecting line (10) wound up in the annular space (9).

3. A filling system according to Claim 1 or 2, **characterised in that** the container (12) for receiving tyre sealing compound (13) is tyre-like round in cross-section and disc-like.

4. A filling system according to at least one of Claims 1 to 3, **characterised in that** the container (12) for receiving tyre sealing compound (13) can be connected or replaced on the end face in re-detachable manner to the housing (4) of the compressor (3).

5. A filling system according to at least one of Claims 1 to 4, **characterised in that** for different fields of application and in particular for different vehicles, such as bicycles, two-wheeled vehicles, passenger cars, lorries, while the diameter remains the same a height (H) of the container (12) is variable, in order to receive different amounts of tyre sealing compound (13) for different vehicles.

6. A filling system according to at least one of Claims 1 to 5, **characterised in that** containers (12) with tyre sealing compound (13) which have approximately the same diameter as a housing (4) of the compressor (3) and different containers (12) with selectable volume can be placed on the end face in one and the same housing (4) with inserted compressor (3).

7. A filling system according to at least one of Claims 1 to 6, **characterised in that** the housing (4) can optionally be connected to a cover (17) and is designed as a standalone component as a compressed-air source, in particular as a compressor (3) which can be operated separately.

8. A filling system according to at least one of Claims 1 to 7, **characterised in that** the compressed-air feed line (11) is mounted between the container (12) for receiving tyre sealing compound (13) and the housing (4).

9. A filling system according to Claim 8, **characterised in that** the compressed-air feed line (11) is mounted preferably close to an outer casing surface via a radially formed step in the housing (4) of the compressor (3) and/or in the container (12) for receiving tyre sealing compound (13), which line is connected at one end directly or indirectly to the compressor (3) and at the other end can be connected or joined to a removal means (14) or any desired user for providing compressed air.

10. A filling system according to at least one of Claims 1 to 6, **characterised in that** a removal means (14) is arranged approximately centrally in the container (12) for receiving tyre sealing compound (13) and can be connected to the container (12) for receiving tyre sealing compound (13), with pressure medium, in particular compressed air, being able to be introduced into the container (12) via the removal means (14) and tyre sealing compound (13) being able to be pumped out of the container (12) into a tyre (1) via a removal line (15).

11. A filling system according to Claim 9 or 10, **characterised in that** a recess is formed radially between the removal means (14) and the container (12) for receiving tyre sealing compound (13), which recess serves to receive and store the removal line (15).

12. A filling system according to at least one of Claims 1 to 11, **characterised in that** the removal means (14) by turning or screwing into the container (12) for receiving tyre sealing compound (13) opens the latter and ensures removal of tyre sealing compound (13).

13. A filling system according to at least one of Claims 1 to 12, **characterised in that** the housing (4) for receiving the compressor (3) has corresponding switches (6), pressure monitoring systems, preferably in the region of the casing surface or a surface provided for this.

14. A filling system according to at least one of Claims 1 to 13, **characterised in that** the housing (4) for receiving the compressor (3) or the container (12) for receiving tyre sealing compound (13) can be erected on any desired base (8).

15. A filling system according to at least one of Claims 1 to 14, **characterised in that** the unit consisting of container (12) for receiving tyre sealing compound (13) and housing (4) with integrated compressor (3) have approximately the same cross-sectional diameter and these are arranged on each other or can be connected on the end face, this unit being able to be inserted in space-saving manner in corresponding wells, rims of tyres, spare wheels or the like installation spaces of a vehicle.

## Revendications

1. Système de remplissage pour rendre étanches et gonfler des pneus (1), avec au moins une source de pression (2), en particulier un compresseur (3) et au moins un récipient (12) destiné à recevoir un moyen d'étanchéité de pneu (13),
**caractérisé par le fait**
**que** l'au moins un récipient (12) destiné à recevoir un moyen d'étanchéité de pneu (13) ainsi que l'au moins un boîtier (4) destiné à recevoir une source de pression (2) sont réalisés à section ronde, le boîtier (4) de la source de pression (2) ainsi que le récipient (12) destiné à recevoir un moyen d'étanchéité de pneu (13) présentant des diamètres environ identiques, et ces derniers étant disposés l'un au-dessus de l'autre du côté frontal.

2. Système de remplissage pour rendre étanches et gonfler des pneus (1), avec au moins une source de pression (2), en particulier un compresseur (3) et au moins un récipient (12) destiné à recevoir un moyen d'étanchéité de pneu (13), **caractérisé par le fait qu'**un boîtier (4) de la source de pression (2), en particulier du compresseur (3), est réalisé en forme de pneu ou cylindrique, dans une face d'enveloppe extérieure du boîtier (4) de la source de pression (2) étant formé un espace annulaire (9) qui sert à recevoir des conduits de raccordement électrique (10) et/ou des conduits d'amenée d'air, et que l'espace annulaire (9) est pourvu, du côté de l'enveloppe, d'éléments d'entretoise réalisés de longueur différente s'étendant du haut vers le bas et/ou du bas vers le haut qui maintiennent les conduits de raccordement électrique (10) enroulés dans l'espace annulaire (9).

3. Système de remplissage selon la revendication 1 ou 2, **caractérisé par le fait que** le récipient (12) destiné à recevoir un moyen d'étanchéité de pneu (13) est réalisé en forme de pneu à section ronde et en forme de disque.

4. Système de remplissage selon au moins l'une des revendications 1 à 3, **caractérisé par le fait que** le récipient (12) destiné à recevoir un moyen d'étanchéité de pneu (13) peut, du côté avant, être assemblé de manière amovible ou échangé avec le boîtier (4) du compresseur (3) ou échangé.

5. Système de remplissage selon au moins l'une des revendications 1 à 4, **caractérisé par le fait que** pour différents domaines d'application et en particulier pour différents véhicules, tels que bicyclettes, véhicules à deux roues, voitures, camions, une hauteur (H) de récipient (12) est variable à diamètre restant identique, pour recevoir, pour des véhicules différents, différentes quantités de moyen d'étanchéité de pneu (13).

6. Système de remplissage selon au moins l'une des revendications 1 à 5, **caractérisé par le fait que** des récipients (12) à moyen d'étanchéité de pneu (13) présentant environ le même diamètre qu'un boîtier (4) du compresseur (3) et différents récipients (12) de volume sélectionnable peuvent être placés du côté frontal dans un même boîtier (4) à compresseur (3) y introduit.

7. Système de remplissage selon au moins l'une des revendications 1 à 6, **caractérisé par le fait que** le boîtier (4) peut éventuellement être assemblé avec un couvercle (17) et est réalisé, en tant que composant indépendant, comme source d'air comprimé, en particulier comme compresseur (3) pouvant fonctionner séparément.

8. Système de remplissage selon au moins l'une des revendications 1 à 7, **caractérisé par le fait qu'**entre le récipient (12) destiné à recevoir un moyen d'étanchéité de pneu (13) et le boîtier (4) est monté le conduit d'amenée d'air (11).

9. Système de remplissage selon la revendication 8, **caractérisé par le fait que** sur un talon réalisé radialement dans le boîtier (4) du compresseur (3) et/ou dans le récipient (12) destiné à recevoir un moyen d'étanchéité de pneu (13) est monté, de préférence près d'une face d'enveloppe extérieure, le conduit d'amenée d'air (11) qui, à une extrémité, est connecté directement ou indirectement, au compresseur (3) et, à l'autre extrémité, peut être connecté ou raccordé à un dispositif de prélèvement (14) ou un utilisateur quelconque destiné à mettre à disposition de l'air comprimé.

10. Système de remplissage selon au moins l'une des revendications 1 à 6, **caractérisé par le fait qu'**un dispositif de prélèvement (14) est disposé environ au centre du récipient (12) destiné à recevoir un moyen d'étanchéité de pneu (13) et peut être connecté au récipient (12) destiné à recevoir un moyen d'étanchéité de pneu (13), par l'intermédiaire du dispositif de prélèvement (14) pouvant être introduit du fluide comprimé, en particulier de l'air comprimé, dans le récipient (12) et par l'intermédiaire d'un conduit de prélèvement (15) pouvant être pompé un moyen d'étanchéité de pneu (13) du récipient (12) dans un pneu (1).

11. Système de remplissage selon la revendication 9 ou 10, **caractérisé par le fait qu'**entre le dispositif de prélèvement (14) et le récipient (12) destiné à recevoir un moyen d'étanchéité de pneu (13) est formé radialement un évidement qui sert à la réception et au montage du conduit de prélèvement (15).

12. Système de remplissage selon au moins l'une des revendications 1 à 11, **caractérisé par le fait que** le dispositif de prélèvement (14), par introduction par rotation ou vissage dans le récipient (12) destiné à recevoir un moyen d'étanchéité de pneu (13), ouvre ce dernier et assure un prélèvement de moyen d'étanchéité de pneu (13).

13. Système de remplissage selon au moins l'une des revendications 1 à 12, **caractérisé par le fait que** le boîtier (4) destiné à recevoir le compresseur (3) présente des interrupteurs (6), des systèmes de surveillance de pression appropriés, de préférence à l'endroit de la face d'enveloppe ou dans une face prévue à cet effet.

14. Système de remplissage selon au moins l'une des revendications 1 à 13, **caractérisé par le fait que** le boîtier (4) destiné à recevoir le compresseur (3) ou le récipient (12) destiné à recevoir un moyen d'étanchéité de pneu (13) peut ou peuvent être installés sur une base (8) quelconque.

15. Système de remplissage selon au moins l'une des revendications 1 à 14, **caractérisé par le fait que** l'unité composée du récipient (12) destiné à recevoir un moyen d'étanchéité de pneu (13) et du boîtier (4) à compresseur intégré (3) présente des diamètres de section environ identiques et que ces derniers sont disposés ou peuvent être connectés l'un au-dessus de l'autre du côté frontal, cette unité pouvant être placée, avec une occupation d'espace réduite, dans des cuvettes, jantes de roue, roues de rechange ou espaces d'incorporation similaires appropriés d'un véhicule.
